# EUROPÄISCHE PATENTSCHRIFT

(11) **EP 4 438 260 B1**
(45) Veröffentlichungstag und Bekanntmachung des Hinweises auf die Patenterteilung: **04.02.2026**
(21) Anmeldenummer: 24161201.9
(22) Anmeldetag: 04.03.2024
(51) Int. Cl.: B29B 7/80, B29B 7/76

(54) **MISCHKOPF**
MIXING HEAD
TÊTE DE MÉLANGE

(30) Priorität: 27.03.2023 DE 102023107583
(43) Veröffentlichungstag der Anmeldung: 02.10.2024
(73) Patentinhaber: KraussMaffei Technologies GmbH, 85599 Parsdorf (DE)
(72) Erfinder: BERG, Alexander, 85221 Dachau (DE); MOSER, Ralf, 80796 München (DE)
(74) Vertreter: Wilhelm, Ludwig

(56) Entgegenhaltungen:
- EP-A1- 2 524 786
- EP-A1- 2 886 280
- EP-A2- 1 449 592
- CN-A- 112 045 880
- DE-A1- 102020 123 521
- US-A- 3 189 325

## Beschreibung

Die Erfindung betrifft einen Mischkopf zur Verarbeitung von reaktiven Kunststoffkomponenten zu einem Kunststoffgemisch, insbesondere zur Verarbeitung von einem Polyolmaterial und einem Isocyanatmaterial zu einem Polyurethanmaterial.

Das Dokument DE19515039A1 offenbart einen Mischkopf mit einer zylindrischen Mischkammer mit Steuerkolben und mit Injektionsdüsen, über welche die Kunststoffkomponenten in die Mischkammer eingebracht werden können. Über ein an die Mischkammer angeschlossenes Auslaufrohr kann das Kunststoffgemisch aus der Mischkammer ausgetragen werden kann. Ferner ist ein Reinigungskolben vorhanden, welcher in dem Auslaufrohr verfahren werden kann. Der Reinigungskolben kann mittels eines Hydraulikfluids zwischen zwei durch mechanische Anschläge definierte Endpositionen verfahren werden, nämlich einer hinteren Endposition, in welcher die Mischkammer mit dem Auslaufrohr fluidisch verbunden ist, und einer vorderen Endposition, in welcher die Frontfläche des Reinigungskolbens mit der Frontfläche des Auslaufrohres in einer Ebene liegt. Die Frontfläche des Reinigungskolbens und die Frontfläche des Auslaufrohres sind von Zeit zu Zeit von anhaftendem Kunststoffgemisch zu reinigen, insbesondere von anhaftendem Polyurethan. Die Druckschriften CN112045880 A, US3189325 A und EP1449592 A2 offenbaren ebenfalls Mischköpfe mit jeweils einer vorderen und hinteren Endposition des Reinigungskolbens.

Für bestimmte Anwendungen kann ein Mischkopf erforderlich sein, bei welchem der Reinigungskolben zumindest abschnittweise aus dem Auslaufrohr herausgefahren werden kann. Dies kann zum Beispiel der Fall sein, wenn ein Kunststoffgemisch in eine Form ausgetragen wird und nachfolgend in dem ausgetragenen Kunststoffgemisch ein Loch erzeugt werden soll, beispielsweise zum Eindrehen einer Schraube in das Kunststoffmaterial. Bei einem solchen Mischkopf ist eine Reinigung von Auslaufrohr und Reinigungskolben verhältnismäßig aufwändig. Um alle Flächen gut reinigen zu können, benötigt man komplizierte Anordnungen von Bürsten, damit alle Flächen von anhaftenden Kunststoffgemisch wie zum Beispiel Polyurethan befreit werden können.

Ausgehend hiervon liegt der Erfindung die Aufgabe zugrunde, einen Mischkopf anzugeben, bei welchem der Reinigungskolben zumindest abschnittsweise aus dem Auslaufrohr herausgefahren werden kann, wobei die Beseitigung von anhaftendem Kunststoffgemisch an Reinigungskolben und Auslaufrohr mit einem geringen Aufwand erfolgen kann.

Die Lösung dieser Aufgabe erfolgt durch einen Mischkopf mit den Merkmalen von Anspruch 1.

Dadurch, dass der Reinigungskolben einerseits zumindest abschnittsweise aus dem Auslaufrohr herausgefahren und zudem andererseits in eine Zwischenposition verfahren werden kann, in welcher die Frontfläche am vorderen Ende des Reinigungskolbens mit der Frontfläche des Auslaufrohres in einer Ebene liegt, kann einerseits die gewünschte Wirkung durch das Ausfahren des Reinigungskolbens erzielt werden und gleichwohl kann die Reinigung von Reinigungskolben und Auslaufrohr vereinfacht werden. Die Zwischenposition ist durch einen mechanischen Anschlag definiert, so dass die Frontflächen von Reinigungskolben und Auslaufrohr mittels des mechanischen Anschlags axial unverschieblich in einer gemeinsamen Ebene gehalten werden. Ein Überfahren dieser gemeinsamen Ebene mittels einer einfachen Bürste oder einem Abstreifer ist für die Reinigung beider Frontflächen ausreichend.

Gemäß einer vorteilhaften Ausführungsform kann der Reinigungskolben zwischen zwei Endpositionen verfahren werden kann, nämlich einer hinteren Endposition, in welcher der Reinigungskolben die Mischkammer in Richtung des Auslaufrohrs freigibt, und einer vorderen Endposition, in welcher der Reinigungskolben zumindest abschnittsweise aus dem Auslaufrohr herausgefahren ist. Die Zwischenposition zum Reinigen der Frontflächen von Reinigungskolben und Auslaufrohr befindet sich zwischen den beiden Endpositionen befindet.

Vorzugsweise sind die beiden Endpositionen durch jeweils einen mechanischen Anschlag definiert.

Gemäß einer vorteilhaften Ausführungsform kann der Reinigungskolben in Wirkverbindung mit einem in einem Zylinder verfahrbaren Antriebskolben stehen, wobei der Antriebskolben mittels des Hydraulikfluids in dem Zylinder zwischen den beiden Endpositionen verfahren werden kann, und wobei in dem Zylinder ein mechanischer Anschlag zum Anfahren der Zwischenposition vorgesehen ist.

Insbesondere kann in dem Zylinder ein hydraulisch verfahrbarer Hilfskolben als mechanischer Anschlag für den Antriebskolben vorgesehen sein.

Der Zylinder kann einen ersten, vorderen Abschnitt mit einem ersten Durchmesser D1 und einen zweiten, hinteren Abschnitt mit einem zweiten Durchmesser D2 aufweisen, wobei D2 größer als D1 ist. Der Übergang von D2 auf D1 kann dabei stufenförmig ausgebildet sein und am Übergang eine kreisringförmige Anschlagfläche orthogonal zur Längsachse des Zylinders vorliegen. Der Hilfskolben kann als Stufenkolben ausgebildet sein, welcher einen ersten, hinteren Abschnitt mit einem Durchmesser entsprechend D2 und einen zweiten vorderen Abschnitt mit einem Durchmesser kleiner als D1 aufweist. Der Hilfskolben kann mit seinem hinteren Abschnitt auf Anschlag mit der Anschlagfläche gebracht werden.

Ein mechanischer Anschlag hat den Vorteil, dass die Zwischenposition exakt definiert ist. Die Position des Anschlags ist derart, dass die Frontfläche am vorderen Ende des Reinigungskolbens mit der Frontfläche des Auslaufrohres in einer Ebene liegt.

Nachfolgend soll die Erfindung anhand eines Ausführungsbeispiels und unter Bezugnahme auf die Figuren 1 bis 4 näher erläutert werden. Es zeigen:
Fig.1 Mischkopf mit Reinigungskolben in hinterer Endposition
Fig.2 Mischkopf mit Reinigungskolben in vorderer Endposition
Fig.3 Mischkopf mit Reinigungskolben in Zwischenposition
Fig.4 Teil des Mischkopfs gemäß der Schnittlinie A-A in Figur 1

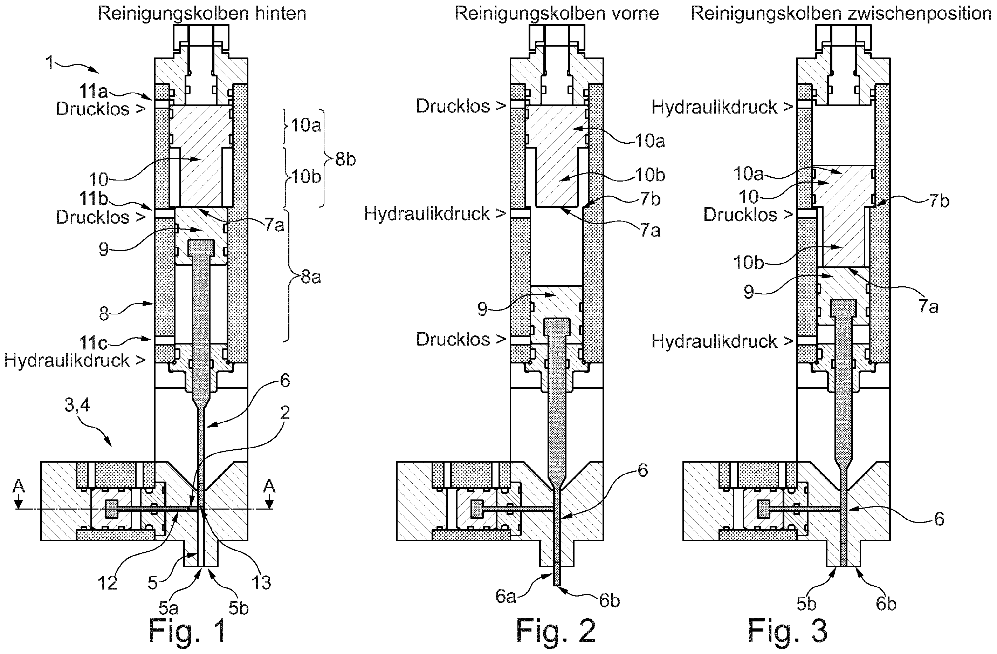

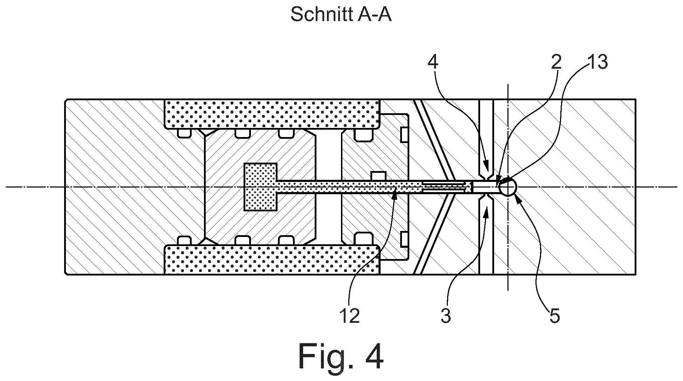

Der insgesamt mit dem Bezugszeichen 1 gekennzeichnete Mischkopf verfügt über eine Mischkammer 2, einen in der Mischkammer 2 reversierbar geführten Steuerkolben 12, und Injektionsdüsen 3 und 4 (siehe Figur 4). In der Mischstellung des Steuerkolbens 12 können die reaktiven Kunststoffkomponenten wie z.B. ein Polyolmaterial und ein Isocyanatmaterial über die beiden Injektionsdüsen 3 und 4 in die Mischkammer 2 eingebracht werden, wo sie zu einem Kunststoffgemisch ausreagieren können. Die Mischkammer 2 steht über eine Mischkammeraustrittsöffnung 13 in fluidischer Verbindung mit einem Auslaufrohr 5, über welche das fertige Kunststoffgemisch ausgetragen werden kann. Das Auslaufrohr 5 verfügt an seinem vorderen Ende über eine Austragsöffnung 5a und eine kreisringförmige Frontfläche 5b. Ein Reinigungskolben 6 kann im Austragsrohr 5 verfahren werden, um etwaige dort verbleibende Anhaftungen an Kunststoffkomponenten und/oder Kunststoffgemisch zu entfernen. Der Reinigungskolben 6 verfügt an seinem vorderen Ende über einen Abschnitt mit einer geriffelten Mantelfläche 6a und eine in der Regel eben ausgebildete Frontfläche 6b. Der Reinigungskolben 6 steht antriebstechnisch in Wirkverbindung mit einem in einem Zylinder 8 verfahrbaren Antriebskolben 9. Mittels eines geeigneten Hydraulikfluids, insbesondere einem Hydrauliköl, kann der Antriebskolben 9 in dem Zylinder 8 verfahren werden, nämlich zwischen einer hinteren Endposition (Figur 1) und einer vorderen Endposition (Figur 2). **In** der hinteren Endposition (Figur 1) hat der Reinigungskolben 6 eine Position, in welcher die Mischkammeraustrittsöffnung 13 in Richtung des Auslaufrohrs 5 geöffnet ist und somit das Kunststoffgemisch über das Auslaufrohr 5 und die Austragsöffnung 5a ausgetragen werden kann. In der vorderen Endposition (Figur 2) ist der Reinigungskolben 6 zumindest abschnittsweise aus dem Auslaufrohr 5 herausgefahren.

In dem Zylinder 8 ist zudem ein hydraulisch verfahrbarer Hilfskolben 10 vorgesehen, dessen vordere Frontfläche einen mechanischen Anschlag 7a für den Antriebskolben 9 bildet, wenn der Hilfskolben 10 in eine dazu passende Position gebracht worden ist, welche der Zwischenposition für den Reinigungskolben 6 bzw. dessen Antriebskolben 9 entspricht.

Der Zylinder 8 verfügt über einen ersten, vorderen Abschnitt 8a mit einem ersten Durchmesser D1 und einen zweiten, hinteren Abschnitt 8b mit einem zweiten Durchmesser D2, wobei D2 größer als D1 ist. Der Übergang von D2 auf D1 ist stufenförmig ausgebildet und infolgedessen liegt am Übergang eine kreisringförmige Anschlagfläche 7b orthogonal zur Längsachse des Zylinders 8 vor. Der Hilfskolben 10 ist als Stufenkolben ausgebildet und verfügt über einen ersten, hinteren Abschnitt 10a mit einem Durchmesser entsprechend D2 und einen zweiten vorderen Abschnitt 10b mit einem Durchmesser kleiner als D1. Der Hilfskolben 10 kann mit seinem hinteren Abschnitt 10a auf Anschlag mit der Anschlagfläche 7b gebracht werden kann. In dieser Position bildet die Frontfläche des Hilfskolbens 10 eine Anschlagfläche 7a als mechanischen Anschlag für den Antriebskolben 9, wie dies in der Figur 3 dargestellt ist. In dieser Position befindet sich der Reinigungskolben 6 in einer Zwischenposition, in welcher die Frontfläche 6b am vorderen Ende des Reinigungskolbens 6 mit der Frontfläche 5b des Auslaufrohres 5 in einer Ebene liegt. Dies erleichtert die Reinigung der Frontfläche 5b, denn ein Überfahren mittels einer einfachen Bürste oder mittels eines Abstreifers ist für die Reinigung ausreichend.

Um den Reinigungskolben 6 in die in den Figuren 1 bis 3 dargestellten Positionen zu bringen, werden die Hydraulikanschlüsse 11a, 11b und 11c und die daran angeschlossenen Druckmittelräume wie in den Figuren 1 bis 3 angegeben mit einem geeigneten Hydraulikdruck beaufschlagt oder drucklos geschaltet.

### Bezugszeichenliste

- 1: Mischkopf
- 2: Mischkammer
- 3, 4: Injektionsdüsen
- 5: Auslaufrohr
- 5a: Austragsöffnung
- 5b: Frontfläche des Auslaufrohres 5
- 6: Reinigungskolben
- 6a: Geriffelte Mantelfläche
- 6b: Frontfläche des Reinigungskolbens 6
- 7a: Erste Anschlagfläche
- 7b: Zweite Anschlagfläche
- 8: Zylinder
- 8a: Vorderer Abschnitt des Zylinders 8 mit Durchmesser D1
- 8b: Hinterer Abschnitt des Zylinders 8 mit Durchmesser D2
- 9: Antriebskolben
- 10: Hilfskolben
- 10a: Hinterer Abschnitt des Hilfskolbens 10
- 10b: Vorderer Abschnitt des Hilfskolbens 10
- 11a: Hinterer Hydraulikanschluss
- 11b: Mittlerer Hydraulikanschluss
- 11c: Vorderer Hydraulikanschluss
- 12: Steuerkolben
- 13: Mischkammeraustrittsöffnung

## Patentansprüche

1. Mischkopf (1) zur Verarbeitung von reaktiven Kunststoffkomponenten zu einem Kunststoffgemisch, insbesondere zur Verarbeitung von einem Polyolmaterial und einem Isocyanatmaterial zu einem Polyurethanmaterial, mit einer Mischkammer (2), einem in der Mischkammer (2) reversierbar geführten Steuerkolben (12) und mit Injektionsdüsen (3, 4), über welche die Kunststoffkomponenten in die Mischkammer (2) eingebracht werden können, mit einem mit der Mischkammer (2) in fluidischer Verbindung stehenden Auslaufrohr (5), über welches das aus der Mischkammer (2) austretende Kunststoffgemisch aus dem Mischkopf (1) ausgetragen werden kann, und mit einem Reinigungskolben (6), welcher in dem Auslaufrohr (5) mittels eines Hydraulikfluids verfahren werden kann,
**dadurch gekennzeichnet, dass**
der Reinigungskolben (6) zumindest abschnittsweise aus dem Auslaufrohr (5) herausgefahren werden kann, und dass der Reinigungskolben (6) in eine Zwischenposition verfahren werden kann, in welcher die Frontfläche (6b) am vorderen Ende des Reinigungskolbens (6) mit der Frontfläche (5b) des Auslaufrohres (5) in einer Ebene liegt, wobei die Zwischenposition durch einen mechanischen Anschlag (7a, 7b) definiert ist.

2. Mischkopf nach Anspruch 1,
**dadurch gekennzeichnet, dass**
der Reinigungskolben (6) zwischen zwei Endpositionen verfahren werden kann, nämlich einer hinteren Endposition, in welcher der Reinigungskolben (6) die Mischkammer (12) in Richtung des Auslaufrohrs (5) freigibt, und einer vorderen Endposition, in welcher der Reinigungskolben (6) zumindest abschnittsweise aus dem Auslaufrohr (5) herausgefahren ist, wobei sich die Zwischenposition zwischen den beiden Endpositionen befindet und wobei vorzugsweise die beiden Endpositionen durch jeweils einen mechanischen Anschlag definiert sind.

3. Mischkopf nach Anspruch 2,
**dadurch gekennzeichnet, dass**
der Reinigungskolben (6) in Wirkverbindung mit einem in einem Zylinder (8) verfahrbaren Antriebskolben (9) steht, wobei der Antriebskolben (9) mittels des Hydraulikfluids in dem Zylinder (8) zwischen den beiden Endpositionen verfahren werden kann, und wobei in dem Zylinder (8) ein mechanischer Anschlag (7a, 7b) zum Anfahren der Zwischenposition vorgesehen ist.

4. Mischkopf nach Anspruch 3,
**dadurch gekennzeichnet, dass**
in dem Zylinder (8) ein hydraulisch verfahrbarer Hilfskolben (10) als mechanischer Anschlag (7a) für den Antriebskolben (9) vorgesehen ist.

5. Mischkopf nach Anspruch 4,
**dadurch gekennzeichnet, dass**
der Zylinder (8) einen ersten, vorderen Abschnitt (8a) mit einem ersten Durchmesser D1 und einen zweiten, hinteren Abschnitt (8b) mit einem zweiten Durchmesser D2 aufweist, wobei D2 größer als D1 ist, wobei der Übergang von D2 auf D1 stufenförmig ausgebildet ist und am Übergang eine kreisringförmige Anschlagfläche (7b) orthogonal zur Längsachse des Zylinders (8) vorliegt, wobei der Hilfskolben (10) als Stufenkolben ausgebildet ist, welcher einen ersten, hinteren Abschnitt (10a) mit einem Durchmesser entsprechend D2 und einen zweiten vorderen Abschnitt (10b) mit einem Durchmesser kleiner als D1 aufweist, und wobei der Hilfskolben (10) mit seinem hinteren Abschnitt (10a) auf Anschlag mit der Anschlagfläche (7b) gebracht werden kann.

## Claims

1. A mixing head (1) for the processing of reactive plastic components to a plastic mixture, in particular for the processing of a polyol material and of an isocyanate material to a polyurethane material, with a mixing chamber (2), a control piston (12) guided reversibly in the mixing chamber (2), and with injection nozzles (3, 4), via which the plastic components can be introduced into the mixing chamber (2), with an outlet pipe (5) in fluidic connection with the mixing chamber (2), via which the plastic mixture exiting from the mixing chamber (2) can be discharged from the mixing head (1), and with a cleaning piston (6) which can be moved in the outlet pipe (5) by means of a hydraulic fluid,
**characterized in that**
the cleaning piston (6) can be moved at least partially out from the outlet pipe (5), and that the cleaning piston (6) can be moved into an intermediate position, in which the front face (6b) at the front end of the cleaning piston (6) lies in one plane with the front face (5b) of the outlet pipe (5), wherein the intermediate position is defined by a mechanical stop (7a, 7b).

2. The mixing head according to Claim 1,
**characterized in that**
the cleaning piston (6) can be moved between two end positions, namely a rear end position in which the cleaning piston (6) frees the mixing chamber (12) in the direction of the outlet pipe (5), and a front end position in which the cleaning piston (6) is moved out at least partially from the outlet pipe (5), wherein the intermediate position is situated between the two end positions and wherein preferably the two end positions are defined by respectively a mechanical stop.

3. The mixing head according to Claim 2,
**characterized in that**
the cleaning piston (6) is in operative connection with a drive piston (9) movable in a cylinder (8), wherein the drive piston (9) can be moved by means of the hydraulic fluid in the cylinder (8) between the two end positions, and wherein a mechanical stop (7a, 7b) for moving to the intermediate position is provided in the cylinder (8).

4. The mixing head according to Claim 3,
**characterized in that**
in the cylinder (8) a hydraulically movable auxiliary piston (10) is provided as mechanical stop (7a) for the drive piston (9).

5. The mixing head according to Claim 4,
**characterized in that**
the cylinder (8) has a first, front portion (8a) with a first diameter D1, and a second, rear portion (8b) with a second diameter D2, wherein D2 is greater than D1, wherein the transition from D2 to D1 is configured in a stepped manner, and at the transition a circular ring-shaped stop face (7b) is present orthogonally to the longitudinal axis of the cylinder (8), wherein the auxiliary piston (10) is configured as a stepped piston which has a first, rear portion (10a) with a diameter corresponding to D2, and a second, front portion (10b) with a diameter smaller than D1, and wherein the auxiliary piston (10) can be brought with its rear portion (10a) to stop with the stop face (7b).

## Revendications

1. Tête mélangeuse (1), destinée à mettre en œuvre des composants réactifs de matière plastique en un mélange de matière plastique, notamment à mettre en œuvre une matière polyol et une matière isocyanate en une matière polyuréthane, dotée d'une chambre de mélange (2), d'un piston de commande (12), guidé de manière réversible dans la chambre de mélange (2) et dotée de buses d'injection (3, 4), par l'intermédiaire desquelles des composants de la matière plastique peuvent être introduits dans la chambre de mélange (2), dotée d'un tube d'évacuation (5) qui se trouve en liaison fluidique avec la chambre de mélange (2), par l'intermédiaire duquel le mélange de matière plastique s'échappant de la chambre de mélange (2) peut être expulsé de la tête mélangeuse (1) et dotée d'un piston de nettoyage (6), lequel peut être déplacé dans le tube d'évacuation (5) au moyen d'un fluide hydraulique,
**caractérisée en ce que**
l'on peut faire sortir le piston de nettoyage (6) au moins par segments du tube d'évacuation (5) et **en ce que** l'on peut déplacer le piston de nettoyage (6) dans une position intermédiaire, dans laquelle la surface frontale (6b) sur l'extrémité antérieure du piston de nettoyage (6) se situe dans un plan avec la surface frontale (5b) du tube d'évacuation (5), la position intermédiaire étant définie par une butée mécanique (7a, 7b).

2. Tête mélangeuse selon la revendication 1,
**caractérisée en ce que**
l'on peut déplacer le piston de nettoyage (6) entre deux positions extrêmes, à savoir une position extrême arrière, dans laquelle le piston de nettoyage (6) libère la chambre de mélange (12) dans la direction du tube d'évacuation (5) et une position extrême avant, dans laquelle l'on peut faire sortir au moins par segments le piston de nettoyage (6) hors du tube d'évacuation (5), la position intermédiaire se trouvant entre les deux positions extrêmes et de préférence, les deux positions extrêmes étant définies par chaque fois une butée mécanique.

3. Tête mélangeuse selon la revendication 2,
**caractérisée en ce que**
le piston de nettoyage (6) se trouve en liaison active avec un piston d'entraînement (9) déplaçable dans un vérin (8), le piston d'entraînement (9) pouvant être déplacé au moyen du fluide hydraulique dans le vérin (8) entre les deux positions extrêmes et dans le vérin (8) étant prévue une butée mécanique (7a, 7b), destinée à aborder la position intermédiaire.

4. Tête mélangeuse selon la revendication 3,
**caractérisée en ce que**
dans le vérin (8) est prévu un piston auxiliaire (10) déplaçable par moyen hydraulique, en tant que butée mécanique (7a) pour le piston d'entraînement (9).

5. Tête mélangeuse selon la revendication 4,
**caractérisée en ce que**
le vérin (8) comporte un premier segment avant (8a), d'un premier diamètre D1 et un deuxième segment arrière (8b) d'un deuxième diamètre D2, D2 étant supérieur à D1, le passage de D2 à D1 étant conçu en échelons et sur le passage étant présente de manière orthogonale par rapport à l'axe longitudinal du vérin (8) une surface de butée (7b) en forme de bague annulaire, le piston auxiliaire (10) étant conçu sous la forme d'un piston échelonné, lequel comporte un premier segment arrière (10a) d'un diamètre correspondant à D2 et un deuxième segment avant (10b) d'un diamètre inférieur à D1 et par son segment arrière (10a), le piston auxiliaire (10) pouvant être amené en butée, par la surface de butée (7b).
